# EUROPEAN PATENT SPECIFICATION

(11) **EP 3 092 057 B1**
(45) Date of publication and mention of the grant of the patent: **19.09.2018**
(21) Application number: 14828600.8
(22) Date of filing: 15.12.2014
(51) Int. Cl.: B01D 61/02, B01D 69/02, B01D 69/12, B01D 71/56

(54) **TREATMENT OF AQUEOUS MIXTURES CONTAINING ANIONIC SURFACTANTS USING FOULING RESISTANT REVERSE OSMOSIS MEMBRANE**
BEHANDLUNG VON WÄSSRIGEN GEMISCHEN ENTHALTEND ANIONISCHE TENSIDE MITHILFE BEWUCHSRESISTENTER UMKEHROSMOSEMEMBRAN
TRAITEMENT DE MÉLANGES AQUEUX CONTENANT UN TENSIOACTIF ANIONIQUE UTILISANT UNE MEMBRANE D'OSMOSE INVERSE RÉSISTANT À L'ENCRASSEMENT

(30) Priority: 07.01.2014 US 201461924245 P
(43) Date of publication of application: 16.11.2016
(73) Proprietor: Dow Global Technologies LLC, Midland, MI 48674 (US)
(72) Inventor: TOMLINSON, Ian A., Midland, MI 48674 (US); PAUL, Mou, Edina, MN 55439 (US); PEERY, Martin H., Edina, MN 55439 (US); ROY, Abhishek, Edina, MN 55439 (US)
(74) Representative: Beck Greener
(86) International application number: PCT/US2014/070285
(87) International publication number: WO 2015/105630

(56) References cited:
- EP-A1- 0 474 370
- WO-A1-2013/047398
- WO-A1-2013/174984
- WO-A1-2014/014668
- WO-A1-2014/109946
- JP-A- H09 155 346
- US-A1- 2012 168 370
- ELIMELECH M ET AL: "Role of membrane surface morphology in colloidal fouling of cellulose acetate and composite aromatic polyamide reverse osmosis membranes", JOURNAL OF MEMBRANE SCIENCE, ELSEVIER, vol. 127, no. 1, 30 April 1997 (1997-04-30), pages 101-109, XP004073466, ISSN: 0376-7388, DOI: 10.1016/S0376-7388(96)00351-1
- KAYA Y ET AL: "Nanofiltration of single and mixture solutions containing anionics and nonionic surfactants below their critical micelle concentrations (CMCs)", JOURNAL OF MEMBRANE SCIENCE, ELSEVIER, vol. 282, no. 1-2, 5 October 2006 (2006-10-05), pages 401-412, XP024931834, ISSN: 0376-7388, DOI: 10.1016/J.MEMSCI.2006.05.047 [retrieved on 2006-10-05]
- MI B ET AL: "Physico-chemical characterization of NF/RO membrane active layers by Rutherford backscattering spectrometry", JOURNAL OF MEMBRANE SCIENCE, ELSEVIER, vol. 282, no. 1-2, 5 October 2006 (2006-10-05), pages 71-81, XP024931798, ISSN: 0376-7388, DOI: 10.1016/J.MEMSCI.2006.05.015 [retrieved on 2006-10-05] cited in the application

## Description

### FIELD

The invention relates the treatment of aqueous mixtures containing anionic surfactants.

### INTRODUCTION

During the process of extracting oil and gas, large amounts of water are brought to the surface. Examples of such processes include hydraulic fracturing operations, steam assisted gravity drainage operations, enhanced oil recovery operations, cyclic steam stimulation operations, coal bed methane (recovery operations as well as conventional oil and gas recovery operations. The impurities present in resulting "produced water" include various salts and chemical additives, e.g. foamers. Foamers used in such extraction processes commonly include surfactants that are known foulants of thin film polyamide composite membranes. As a consequence, thin film polyamide composite membranes have found limited utility in such applications. See for example US2012/125620, US7122509, US 7523647, US8551925 and US2005/0137114. Similar problems are encountered in treating waste water including detergents, (also including animal, vegetable or mineral oils - see JP 9155346); and aqueous mixtures used as lubricants or coolants in metal cutting and shaping operations (US4201664). See also WO2013/174984, JP 09155346 and US 2012/0168370. Fouling problems associated with anionic surfactants becomes even more problematic when treating aqueous mixtures having pH values below the isoelectric point of thin film polyamide composite membrane.

### SUMMARY

The present invention includes the use of a new fouling-resistant thin film polyamide composite membrane for treating aqueous mixtures containing anionic surfactants. In one embodiment, the invention includes a method for treating an aqueous mixture containing at least 2 ppm of an anionic surfactant including the step of passing the mixture through a spiral wound element to produce a permeate stream and concentrate stream wherein the concentrate stream has a relatively higher concentration of the surfactant than the permeate stream, wherein the spiral wound element includes a composite polyamide membrane comprising a porous support and a thin film polyamide layer, and wherein the membrane is characterized by having: i) a NaCl rejection and a sodium lauryl sulfate rejection of at least 99% when tested with an aqueous solution containing 2000 ppm NaCl and either in separate solutions or in a combined solution 2 ppm of sodium lauryl sulfate at 25°C, pH 8 and IMPa (150 psi); and ii) a dissociated carboxylate content of at least 0.3 moles/kg of polyamide at pH 9.5 as measured by Rutherford Backscattering (RBS). The subject membranes possess a high anionic charge that provides excellent water flux and salt rejection while resisting fouling typically associated with aqueous mixtures containing surfactants.

### DETAILED DESCRIPTION

Aqueous feed mixtures applicable in the present invention may contain a variety of contaminants including oils, dissolved salts (e.g. at least 2000 ppm NaCl and commonly at least 5000 ppm) along with at least 2 ppm of one or more anionic surfactants. The surfactants present in the aqueous mixture may serve a variety of functions including; detergents, wetting agents, emulsifiers, foaming agents, and dispersants. For purposes of this description, the term "anionic surfactant" refers to a surfactant containing a hydrophobic "tail", e.g. hydrocarbon portion, and an anionic "head," e.g. sulfate, sulfonate, phosphate, or carboxylate functional group. Applicable alkyl sulfates include ammonium lauryl sulfate, sodium lauryl sulfate and the related alkyl-ether sulfates sodium laureth sulfate, also known as sodium lauryl ether sulfate (SLES), and sodium myreth sulfate. Examples further include alkyl-aryl ether phosphates and alkyl ether phosphate. Applicable "carboxylates" include sodium stearate, sodium lauroyl sarcosinate and carboxylate-based fluorosurfactants such as perfluorononanoate, perfluorooctanoate (PFOA or PFO). In a preferred embodiment, the aqueous mixtures includes from 2 to 200 ppm of an anionic surfactant. In many embodiments, the pH of the aqueous mixture is equal to or less than 5, 4, or even 3.

The aqueous feed mixture may be pretreated (e.g. subject to micro or ultrafiltration, pH adjustment, etc.) prior to passing through one or more spiral wound elements. In a preferred embodiment, an anionic surfactant is added to the aqueous mixture prior to passing through the spiral wound element(s).

The aqueous mixture is treated by passing under pressure through one or more spiral wound elements. A portion of the mixture permeates through a composite polyamide membrane to form a permeate stream with reduced salt and surfactant content and a concentrate stream containing an increased concentration of salt and surfactant. During the step of producing permeate, the element ("system") is preferably operated at a flux less than 100, 75, 50 40 or even 30 l/m²hr and a permeate recovery of from 45 to 85%. "Recovery" is defined as the permeate volume leaving the element (or vessel) compared to that entering the element (or vessel).

Spiral wound modules ("elements") of the present invention are suitable for use in reverse osmosis (RO). Such modules include one or more RO membrane envelops and feed spacer sheets wound around a permeate collection tube. RO membranes used to form envelops are relatively impermeable to virtually all dissolved salts and typically reject more than about 95% of inorganic molecules as well as organic molecules with molecular weights greater than approximately 100 AMU (Daltons). In the present invention, the membranes preferably have a NaCl rejection and a sodium lauryl sulfate rejection of at least 99% when tested with an aqueous solution containing 2000 ppm NaCl and 2 ppm anionic surfactant (either as a single solution or tested as separate solutions) at 25°C, pH 8 and 1MPa (150 psi).

Spiral wound membrane elements may be formed by winding one or more membrane envelopes and optional feed channel spacer sheet(s) ("feed spacers") about a permeate collection tube. Each membrane envelope preferably comprises two substantially rectangular membrane sheets surrounding a permeate channel spacer sheet ("permeate spacer"). This sandwich-type structure is secured together, e.g. by sealant, along three edges while the fourth edge abuts the permeate collection tube. The permeate spacer is in fluid contact with openings passing through the permeate collection tube. An outer housing of the element may be constructed from a variety of materials including stainless steel, tape and PVC material. Additional details regarding various components and construction of spiral wound elements are provided in the literature, see for example: US 5538642 which describes a technique for attaching a permeate spacer to a permeate collection tube, US 7951295 which describes trimming operations and the use of a UV adhesive for forming a insertion point seal, US 7875177 which describes an applicable leaf packet.

The membrane sheet is a composite structure having a discriminating layer formed by interfacially polymerization. The membrane includes a backing layer (back side) of a nonwoven backing web (e.g. a non-woven fabric such as polyester fiber fabric available from Awa Paper Company), a middle layer comprising a porous support having a typical thickness of about 25-125 µm and top discriminating layer (front side) comprising a thin film polyamide layer having a thickness preferably from 0.01 to 0.1 µm. The backing layer is not particularly limited but preferably comprises a non-woven fabric or fibrous web mat including fibers which may be orientated. Alternatively, a woven fabric such as sail cloth may be used. Representative examples are described in US 4,214,994; US 4,795,559; US 5,435,957; US 5,919,026; US 6,156,680; US 2008/0295951 and US 7,048,855. The porous support is preferably a polymeric material having pore sizes which are of sufficient size to permit essentially unrestricted passage of permeate but not large enough so as to interfere with the bridging over of a thin film polyamide layer formed thereon. For example, the pore size of the support preferably ranges from about 0.001 to 0.5 µm. Non-limiting examples of porous supports include those made of: polysulfone, polyether sulfone, polyimide, polyamide, polyetherimide, polyacrylonitrile, poly(methyl methacrylate), polyethylene, polypropylene, and various halogenated polymers such as polyvinylidene fluoride.

The polyamide layer is preferably prepared by an interfacial polycondensation reaction between a polyfunctional amine monomer and a polyfunctional acyl halide monomer upon the surface of the porous support as described in US 4277344 and US 6878278. More specifically, the polyamide membrane layer may be prepared by interfacially polymerizing a polyfunctional amine monomer with a polyfunctional acyl halide monomer, (wherein each term is intended to refer both to the use of a single species or multiple species), on at least one surface of a porous support. As used herein, the term "polyamide" refers to a polymer in which amide linkages (-C(O)NH-) occur along the molecular chain. The polyfunctional amine and polyfunctional acyl halide monomers are most commonly applied to the porous support by way of a coating step from solution, wherein the polyfunctional amine monomer is typically coated from an aqueous-based or polar solution and the polyfunctional acyl halide from an organic-based or non-polar solution. Although the coating steps need not follow a specific order, the polyfunctional amine monomer is preferably first coated on the porous support followed by the polyfunctional acyl halide. Coating can be accomplished by spraying, film coating, rolling, or through the use of a dip tank among other coating techniques. Excess solution may be removed from the support by air knife, dryers, ovens and the like. Due to its relative thinness, the polyamide layer is often described in terms of its coating coverage or loading upon the porous support, e.g. from about 2 to 5000 mg of polyamide per square meter surface area of porous support and more preferably from about 50 to 500 mg/m².

The polyfunctional amine monomer comprises at least two primary amine groups and may be aromatic (e.g., m-phenylenediamine (mPD), p-phenylenediamine, 1,3,5-triaminobenzene, 1,3,4-triaminobenzene, 3,5-diaminobenzoic acid, 2,4-diaminotoluene, 2,4-diaminoanisole, and xylylenediamine) or aliphatic (e.g., ethylenediamine, propylenediamine, cyclohexanne-1,3-diameine and tris (2-diaminoethyl) amine). One particularly preferred polyfunctional amine is m-phenylene diamine (mPD). The polyfunctional amine monomer may be applied to the porous support as a polar solution. The polar solution may contain from about 0.1 to about 10 wt% and more preferably from about 1 to about 6 wt% polyfunctional amine monomer. In one set of embodiments, the polar solutions includes at least 2.5 wt% (e.g. 2.5 to 6 wt %) of the polyfunctional amine monomer. Once coated on the porous support, excess solution may be optionally removed.

The polyfunctional acyl halide monomer comprises at least two acyl halide groups and preferably no carboxylic acid functional groups and may be coated from a non-polar solvent although the polyfunctional acyl halide may be alternatively delivered from a vapor phase (e.g., for polyfunctional acyl halides having sufficient vapor pressure). The polyfunctional acyl halide is not particularly limited and aromatic or alicyclic polyfunctional acyl halides can be used along with combinations thereof. Non-limiting examples of aromatic polyfunctional acyl halides include: trimesic acyl chloride, terephthalic acyl chloride, isophthalic acyl chloride, biphenyl dicarboxylic acyl chloride, and naphthalene dicarboxylic acid dichloride. Non-limiting examples of alicyclic polyfunctional acyl halides include: cyclopropane tri carboxylic acyl chloride, cyclobutane tetra carboxylic acyl chloride, cyclopentane tri carboxylic acyl chloride, cyclopentane tetra carboxylic acyl chloride, cyclohexane tri carboxylic acyl chloride, tetrahydrofuran tetra carboxylic acyl chloride, cyclopentane dicarboxylic acyl chloride, cyclobutane dicarboxylic acyl chloride, cyclohexane dicarboxylic acyl chloride, and tetrahydrofuran dicarboxylic acyl chloride. One preferred polyfunctional acyl halide is trimesoyl chloride (TMC). The polyfunctional acyl halide may be dissolved in a non-polar solvent in a range from about 0.01 to 10 wt%, preferably 0.05 to 3% wt% and may be delivered as part of a continuous coating operation. In one set of embodiments wherein the polyfunctional amine monomer concentration is less than 3 wt %, the polyfunctional acyl halide is less than 0.3 wt %.

Suitable non-polar solvents are those which are capable of dissolving the polyfunctional acyl halide and which are immiscible with water; e.g. paraffins (e.g. hexane, cyclohexane, heptane, octane, dodecane), isoparaffins (e.g. ISOPAR™ L), aromatics (e.g. Solvesso™ aromatic fluids, Varsol™ non-dearomatized fluids, benzene, alkylated benzene (e.g. toluene, xylene, trimethylbenzene isomers, diethylbenzene)) and halogenated hydrocarbons (e.g. FREON™ series, chlorobenzene, di and trichlorobenzene) or mixtures thereof. Preferred solvents include those which pose little threat to the ozone layer and which are sufficiently safe in terms of flashpoints and flammability to undergo routine processing without taking special precautions. A preferred solvent is ISOPAR™ available from Exxon Chemical Company. The non-polar solution may include additional constituents including co-solvents, phase transfer agents, solubilizing agents, complexing agents and acid scavengers wherein individual additives may serve multiple functions. Representative co-solvents include: benzene, toluene, xylene, mesitylene, ethyl benzene- diethylene glycol dimethyl ether, cyclohexanone, ethyl acetate, butyl carbitol™ acetate, methyl laurate and acetone. A representative acid scavenger includes N, N-diisopropylethylamine (DIEA). The non-polar solution may also include small quantities of water or other polar additives but preferably at a concentration below their solubility limit in the non-polar solution.

One or both of the polar and non-polar solutions preferably include a tri-hydrocarbyl phosphate compound as represented by Formula I: 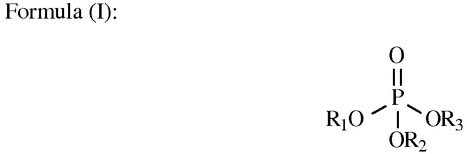 wherein "P" is phosphorous, "O" is oxygen and R₁, R₂ and R₃ are independently selected from hydrogen and hydrocarbyl groups comprising from 1 to 10 carbon atoms, with the proviso that no more than one of R₁, R₂ and R₃ are hydrogen. R₁, R₂ and R₃ are preferably independently selected from aliphatic and aromatic groups. Applicable aliphatic groups include both branched and unbranched species, e.g. methyl, ethyl, propyl, isopropyl, butyl, isobutyl, pentyl, 2-pentyl, 3-pentyl. Applicable cyclic groups include cyclopentyl and cyclohexyl. Applicable aromatic groups include phenyl and naphthyl groups. Cyclo and aromatic groups may be linked to the phosphorous atom by way of an aliphatic linking group, e.g., methyl, ethyl, etc. The aforementioned aliphatic and aromatic groups may be unsubstituted or substituted (e.g., substituted with methyl, ethyl, propyl, hydroxyl, amide, ether, sulfone, carbonyl, ester, cyanide, nitrile, isocyanate, urethane, beta-hydroxy ester, etc); however, unsubstituted alkyl groups having from 3 to 10 carbon atoms are preferred. Specific examples of tri-hydrocarbyl phosphate compounds include: tripropyl phosphate, tributyl phosphate, tripentyl phosphate, trihexyl phosphate, triphenyl phosphate, propyl biphenyl phosphate, dibutyl phenyl phosphate, butyl diethyl phosphate, dibutyl hydrogen phosphate, butyl heptyl hydrogen phosphate and butyl heptyl hexyl phosphate. The specific compound selected should be at least partially soluble in the solution from which it is applied. Additional examples are as such compounds are described in US 6878278, US 6723241, US 6562266 and US 6337018.

In a preferred class of embodiments, the non-polar solution preferably includes from 0.001 to 10 wt% and more preferably from 0.01 to 1 wt% of the tri-hydrocarbyl phosphate compound. In another embodiment, the non-polar solution includes the tri-hydrocarbyl phosphate compound in a molar (stoichiometric) ratio of 1:5 to 5:1 and more preferably 1:1 to 3:1 with the polyfunctional acyl halide monomer.

In a preferred subset of embodiments, the non-polar solution may additionally include an acid-containing monomer comprising a C₂-C₂₀ hydrocarbon moiety substituted with at least one carboxylic acid functional group or salt thereof and at least one amine-reactive functional group selected from: acyl halide, sulfonyl halide and anhydride, wherein the acid-containing monomer is distinct from the polyfunctional acyl halide monomer. In one set of embodiments, the acid-containing monomer comprises an arene moiety. Non-limiting examples include mono and dihydrolyzed counterparts of the aforementioned polyfunctional acyl halide monomers including two to three acyl halide groups and mono, di and tri-hydrolyzed counterparts of the polyfunctional halide monomers that include at least four amine-reactive moieties. A preferred species includes 3,5-bis(chlorocarbonyl)benzoic acid (i.e. mono-hydrolyzed trimesoyl chloride or "mhTMC"). Additional examples of monomers are described in WO 2012/102942 and WO 2012/102943 (see Formula III wherein the amine-reactive groups ("Z") are selected from acyl halide, sulfonyl halide and anhydride). Specific species including an arene moiety and a single amine-reactive group include: 3-carboxylbenzoyl chloride, 4-carboxylbenzoyl chloride, 4-carboxy phthalic anhydride and 5-carboxy phthalic anhydride, and salts thereof. Additional examples are represented by Formula II: 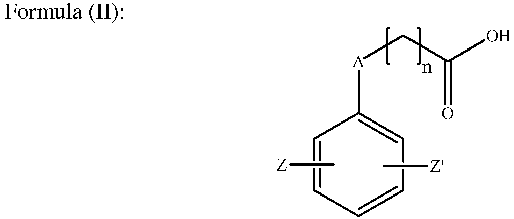 wherein A is selected from: oxygen (e.g. -O-); amino (-N(R)-) wherein R is selected from a hydrocarbon group having from 1 to 6 carbon atoms, e.g. aryl, cycloalkyl, alkyl - substituted or unsubstituted but preferably alkyl having from 1 to 3 carbon atoms with or without substituents such as halogen and carboxyl groups); amide (-C(O)N(R))- with either the carbon or nitrogen connected to the aromatic ring and wherein R is as previously defined; carbonyl (-C(O)-); sulfonyl (-SO₂-); or is not present (e.g. as represented in Formula III); n is an integer from 1 to 6, or the entire group is an aryl group; Z is an amine reactive functional group selected from: acyl halide, sulfonyl halide and anhydride (preferably acyl halide); Z' is selected from the functional groups described by Z along with hydrogen and carboxylic acid. Z and Z' may be independently positioned meta or ortho to the A substituent on the ring. In one set of embodiments, n is 1 or 2. In yet another set of embodiments, both Z and Z' are both the same (e.g. both acyl halide groups). In another set of embodiments, A is selected from alkyl and alkoxy groups having from 1 to 3 carbon atoms. Non-limiting representative species include: 2-(3,5-bis(chlorocarbonyl)phenoxy)acetic acid, 3-(3,5-bis(chlorocarbonyl)phenyl) propanoic acid, 2-((1,3-dioxo-1,3-dihydroisobenzofuran-5-yl)oxy)acetic acid, 3-(1,3-dioxo-1,3-dihydroisobenzofuran-5-yl)propanoic acid, 2-(3-(chloro carbonyl) phenoxy)acetic acid, 3-(3-(chlorocarbonyl)phenyl)propanoic acid, 3-((3,5bis(chloro carbonyl)phenyl) sulfonyl) propanoic acid, 3-((3-(chlorocarbonyl)phenyl)sulfonyl)propanoic acid, 3-((1,3-dioxo-1,3-dihydroisobenzofuran-5-yl)sulfonyl)propanoic acid, 3-((1,3-dioxo-1,3-dihydroisobenzofuran-5-yl)amino) propanoic acid, 3-((1,3-dioxo-1,3-dihydroisobenzofuran-5-yl)(ethyl)amino)propanoic acid, 3-((3,5-bis(chlorocarbonyl) phenyl)amino) propanoic acid, 3-((3,5-bis(chlorocarbonyl) phenyl)(ethyl)amino) propanoic acid, 4-(4-(chlorocarbonyl)phenyl)-4-oxobutanoic acid, 4-(3,5-bis(chlorocarbonyl)phenyl)-4-oxobutanoic acid, 4-(1,3-dioxo-1,3-dihydroisobenzofuran-5-yl)-4-oxobutanoic acid, 2-(3,5-bis(chlorocarbonyl) phenyl)acetic acid, 2-(2,4-bis(chlorocarbonyl)phenoxy) acetic acid, 4-((3,5-bis(chlorocarbonyl) phenyl)amino)-4-oxobutanoic acid, 2-((3,5-bis(chloro carbonyl)phenyl)amino)acetic acid, 2-(N-(3,5-bis(chloro carbonyl)phenyl)acetamido)acetic acid, 2,2'-((3,5-bis(chlorocarbonyl)phenylazanediyl) diacetic acid, N-[(1,3-dihydro-1,3-dioxo-5-isobenzofuranyl)carbonyl]-glycine, 4-[[(1,3-dihydro-1,3-dioxo-5-isobenzofuranyl)carbonyl]amino]-benzoic acid, 1,3-dihydro-1,3-dioxo-4-isobenzofuran propanoic acid, 5-[[(1,3-dihydro-1,3 -dioxo-5-isobenzofuranyl)carbonyl]amino]-1,3-benzene dicarboxylic acid and 3-[(1,3-dihydro-1,3-dioxo-5-isobenzofuranyl)sulfonyl]-benzoic acid.

Another embodiment is represented by Formula III. 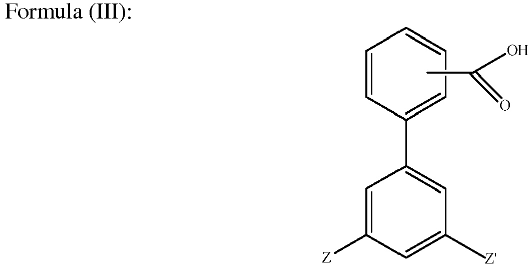 wherein the carboxylic acid group may be located meta, para or ortho upon the phenyl ring.

Representative examples where the hydrocarbon moiety is an aliphatic group are represented by Formula IV: 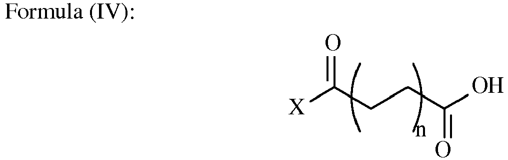 wherein X is a halogen (preferably chlorine) and n is an integer from 1 to 20, preferably 2 to 10. Representative species include: 4-(chlorocarbonyl) butanoic acid, 5-(chlorocarbonyl) pentanoic acid, 6-(chlorocarbonyl) hexanoic acid, 7-(chlorocarbonyl) heptanoic acid, 8-(chlorocarbonyl) octanoic acid, 9-(chlorocarbonyl) nonanoic acid, 10-(chlorocarbonyl) decanoic acid, 11-chloro-11-oxoundecanoic acid, 12-chloro-12-oxododecanoic acid, 3-(chlorocarbonyl)cyclobutanecarboxylic acid, 3-(chlorocarbonyl)cyclopentane carboxylic acid, 2,4-bis(chlorocarbonyl)cyclopentane carboxylic acid, 3,5-bis(chlorocarbonyl) cyclohexanecarboxylic acid, and 4-(chlorocarbonyl) cyclohexanecarboxylic acid. While the acyl halide and carboxylic acid groups are shown in terminal positions, one or both may be located at alternative positions along the aliphatic chain. While not shown in Formula (IV), the acid-containing monomer may include additional carboxylic acid and acyl halide groups.

Representative examples of acid-containing monomers include at least one anhydride group and at least one carboxylic acid groups include: 3,5-bis(((butoxycarbonyl)oxy)carbonyl)benzoic acid, 1,3-dioxo-1,3-dihydroisobenzofuran-5-carboxylic acid, 3-(((butoxycarbonyl)oxy)carbonyl) benzoic acid, and 4-(((butoxycarbonyl)oxy)carbonyl)benzoic acid.

The upper concentration range of acid-containing monomer may be limited by its solubility within the non-polar solution and is dependent upon the concentration of the tri-hydrocarbyl phosphate compound, i.e. the tri-hydrocarbyl phosphate compound is believed to serve as a solubilizer for the acid-containing monomer within the non-polar solvent. In most embodiments, the upper concentration limit is less than 1 wt %. In one set of embodiments, the acid-containing monomer is provided in the non-polar solution at concentration of at least 0.01 wt%, 0.02 wt%, 0.03 wt%, 0.04 wt%, 0.05 wt%, 0.06 wt%, 0.07 wt%, 0.08 wt%, 0.1wt% or even 0.13wt % while remaining soluble in solution. In another set of embodiments, the non-polar solution comprises from 0.01 to 1 wt %, 0.02 to 1 wt %, 0.04 to 1 wt % or 0.05 to 1 wt% of the acid-containing monomer. The inclusion of the acid-containing monomer during interfacial polymerization between the polyfunctional amine and acyl halide monomers results in a membrane having improved performance. And, unlike post hydrolysis reactions that may occur on the surface of the thin-film polyamide layer, the inclusion of the acid-containing monomer during interfacial polymerization is believed to result in a polymer structure that is beneficially modified throughout the thin-film layer.

In a preferred embodiment, the thin film polyamide layer is characterized by having a dissociated carboxylate content of at least 0.3, 0.4 and in some embodiments at least 0.45moles/kg of polyamide at pH 9.5 as measured by a Rutherford Backscattering (RBS) measurement technique. More specifically, samples membranes (1 inch x 6 inch) are boiled for 30 minutes in deionized water (800 mL), then placed in a 50/50 w/w solution of methanol and water (800 mL) to soak overnight. Next, 1 inch x 1 inch size sample of these membranes are immersed in a 20 mL 1 x 10⁻⁴ M AgNO₃ solution with pH adjusted to 9.5 for 30 minutes. Vessels containing silver ions are wrapped in tape and to limit light exposure. After soaking with the silver ion solution, the unbound silver is removed by soaking the membranes in 2 clean 20 mL aliquots of dry methanol for 5 minutes each. Finally, the membranes are allowed to dry in a nitrogen atmosphere for a minimum of 30 minutes. Membrane samples are mounted on a thermally and electrically conductive double sided tape, which was in turn mounted to a silicon wafer acting as a heat sink. The tape is preferably Chromerics Thermattach T410 or a 3M copper tape. RBS measurements are obtained with a Van de Graff accelerator (High Voltage Engineering Corp., Burlington, MA); A 2 MeV He⁺ room temperature beam with a diameter of 3 mm at an incident angle of 22.5°, exit angle of 52.5°, scattering angle of 150°, and 40 nanoamps (nAmps) beam current. Membrane samples are mounted onto a movable sample stage which is continually moved during measurements. This movement allows ion fluence to remain under 3 x 10¹⁴ He⁺/cm². Analysis of the spectra obtained from RBS is carried out using SIMNRA®, a commercially available simulation program. A description of its use to derive the elemental composition from RBS analysis of RO/NF membranes is described by; Coronell, et. al. J. of Membrane Sci. 2006, 282, 71-81 and Environmental Science & Technology 2008, 42(14), 5260-5266. Data can be obtained using the SIMNRA® simulation program to fit a two layer system, a thick polysulfone layer beneath a thin polyamide layer, and fitting a three-layer system (polysulfone, polyamide, and surface coating) can use the same approach. The atom fraction composition of the two layers (polysulfone before adding the polyamide layer, and the surface of final TFC polyamide layer) is measured first by XPS to provide bounds to the fit values. As XPS cannot measure hydrogen, an H/C ratio from the proposed molecular formulas of the polymers were used, 0.667 for polysulfone and a range of 0.60 - 0.67 was used for polyamide. Although the polyamides titrated with silver nitrate only introduces a small amount of silver, the scattering cross section for silver is substantially higher than the other low atomic number elements (C, H, N, O, S) and the size of the peak is disproportionately large to the others despite being present at much lower concentration thus providing good sensitivity. The concentration of silver is determined using the two layer modeling approach in SIMNRA® by fixing the composition of the polysulfone and fitting the silver peak while maintaining a narrow window of composition for the polyamide layer (layer 2, ranges predetermined using XPS). From the simulation, a molar concentration for the elements in the polyamide layer (carbon, hydrogen, nitrogen, oxygen and silver) is determined. The silver concentration is a direct reflection of the carboxylate molar concentration available for binding silver at the pH of the testing conditions. The moles of carboxylic acids groups per unit area of membrane is indicative of the number of interactions seen by a species passing through the membrane, and a larger number will thus favorably impact salt passage. This value may be calculated by multiplying the measured carboxylate content by a measured thickness and by the polyamide density.

A preferred method to determine the dissociated carboxylate number at pH 9.5 per unit area of membrane for a thin film polyamide membrane is as follows. A membrane sample is boiled for 30 minutes in deionized water, and then placed in a 50 wt% solution of methanol in water to soak overnight. Next, the membrane sample is immersed in a 1 x 10⁻⁴ M AgNO₃ solution with pH adjusted to 9.5 with NaOH for 30 minutes. After soaking in the silver ion solution, the unbound silver is removed by soaking the membranes twice in dry methanol for 30 minutes. The amount of silver per unit area is preferably determined by ashing, as described by Wei, and redissolving for measurement by ICP. Preferably, the dissociated carboxylate number at pH 9.5 per square meter of membrane is greater than 6x10⁻⁵, 8x10⁻⁵, 1x10⁻⁴, 1.2x10⁻⁴, 1.5x10⁻⁴, 2x10⁻⁴, or even 3x10⁻⁴ moles/m².

In another preferred embodiment, pyrolysis of the thin film polyamide layer at 650°C results in a ratio of responses from a flame ionization detector for fragments produced at 212 m/z and 237 m/z of less than 2.8, and more preferably less than 2.6. The fragments produced at 212 and 237 m/z are represented by Formula V and VI, respectively. 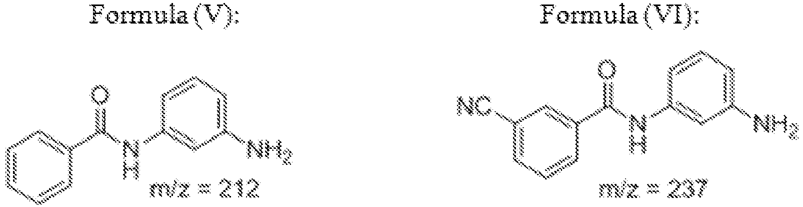 This ratio of fragments is believed to be indicative of polymer structures that provide improved flux, salt passage or integrity (particularly for membranes having relatively high carboxylic acid content, e.g. a dissociated carboxylate content of at least 0.18, 0.20, 0.22, 0.3, and in some embodiments at least 0.4 moles/kg of polyamide at pH 9.5). Investigation has shown that dimer fragment 212 m/z forms predominantly during pyrolysis temperatures below 500°C whereas dimer fragment 237 m/z predominantly forms at pyrolysis temperatures above 500°C. This indicates that dimer fragment 212 originates from end groups where only single bound cleavage prevails and that dimer fragment 237 originates substantially from the bulk material where multiple bond cleavages and reduction occurs. Thus, the ratio of dimer fragment 212 to 237 can be used as a measure of relative conversion.

A preferred pyrolysis methodology is conducted using gas chromatography mass spectrometry with mass spectral detection, e.g. a Frontier Lab 2020iD pyrolyzer mounted on an Agilent 7890 GC with detection using a LECO time of flight (TruTOF) mass spectrometer. Peak area detection is made using a flame ionization detector (FID). Pyrolysis is conducted by dropping the polyamide sample cup into pyrolysis oven set at 650°C for 6 seconds in single shot mode. Separation is performed using a 30M X 0.25mm id column from Varian (FactorFour VF-5MS CP8946) with a 1 um 5% phenyl methyl silicone internal phase. Component identification is made by matching the relative retention times of the fragment peaks to that of the same analysis performed with a LECO time of flight mass spectrometer (or optionally by matching mass spectra to a NIST database or references from literature). Membrane samples are weighed into Frontier Labs silica lined stainless steel cups using a Mettler E20 micro-balance capable of measuring to 0.001 mg. Sample weight targets were 200 ug +/- 50 ug. Gas chromatograph conditions are as follows: Agilent 6890 GC (SN: CN10605069), with a 30M X 0.25 mm, 1 µm 5% dimethyl polysiloxane phase (Varian FactorFour VF-5MS CP8946); injection port 320°C, Detector port: 320°C, Split injector flow ratio of 50:1, GC Oven conditions: 40°C to 100°C at 6°C per min., 100°C to 320°C at 30°C/min, 320°C for 8 min; Helium carrier gas with constant flow of 0.6 mL/min providing a back pressure of 5.0 psi. LECO TruTOF Mass Spectrometer Parameters are as follows: electron ionization source (positive EI mode), Scan Rate of 20 scans per second, Scan range: 14 - 400 m/z; Detector voltage = 3200 (400V above tune voltage); MS acquisition delay = 1 min; Emission Voltage - 70V. The peak area of the fragment 212 m/z and fragment 237 m/z are normalized to the sample weight. The normalized peak areas are used to determine the ratio of fragments 212 m/z to 237 m/z. Further the normalize peak area of fragment 212 m/z is divided by the sum of the normalized peak areas for all other fragments providing a fraction of the m/z 212 fragment relative to the polyamide and is commonly noted as a percent composition by multiplying by 100. Preferably this value is less than 12 %.

In yet another preferred embodiment, the thin film layer has an isoelectric point (IEP) of less than or equal to 5, 4.3, 4.2, 4.1, 4, 3.8, 3.6, 3.5 or in some embodiments, 3. The isoelectric point can be determined using a standard Zeta-Potential technique with a quartz cell by electrophoretic light scattering (ELS) using Desal Nano HS instrument. For example, membrane samples (2 inch x 1 inch) are first boiled for 20 minutes in DI water, then rinsed well with room temperature DI water and stored at room temperature in a fresh DI solution overnight. The samples are then loaded as per reference: 2008 "User's Manual for the Delsa™ Nano Submicron Particle Size and Zeta Potential," and the "Pre-Course Reading" for the same instrument presented by Beckmann Coulter. pH titration is completed over a range from pH 10 to pH 2 and isoelectric point is determined at the pH where the zeta potential becomes zero.

Once brought into contact with one another, the polyfunctional acyl halide and polyfunctional amine monomers react at their surface interface to form a polyamide layer or film. This layer, often referred to as a polyamide "discriminating layer" or "thin film layer," provides the composite membrane with its principal means for separating solute (e.g. salts) from solvent (e.g. aqueous feed). The reaction time of the polyfunctional acyl halide and the polyfunctional amine monomer may be less than one second but contact times typically range from about 1 to 60 seconds. The removal of the excess solvent can be achieved by rinsing the membrane with water and then drying at elevated temperatures, e.g. from about 40°C to about 120°C, although air drying at ambient temperatures may be used. However, for purposes of the present invention, the membrane is preferably not permitted to dry and is simply rinsed (e.g. dipped) with water and optionally stored in a wet state.

The polyamide layer may subsequently be treated with a polyfunctional arene compound including 1 or 2 (preferably 1) benzene rings (which may be fused; or linked (L) by a direct bond between the rings, an alkylene group comprising from 1 to 6 carbon atoms and an oxyalkylene group comprising from 1 to 6 carbon atoms) that are collectively substituted with:
i) a first functional group (w) selected from: -NR₄R₅ (amine,) and -OH (hydroxyl),
ii) a second functional group (x) selected from: -NR₄R₅ (amine), -OH (hydroxyl), -COOH (carboxylic acid) and -SO₃H (sulfonic acid), and
iii) a third functional group (y) selected from: -H (hydrogen), - NR₄R₅ (amine), -OH (hydroxyl), -COOH (carboxylic acid) and -SO₃H (sulfonic acid).
iv) a fourth functional group (z) selected from: -H (hydrogen), -CH₃ (methyl), -NR₄R₅ (amine), -OH (hydroxyl), -COOH (carboxylic acid) and -SO₃H (sulfonic acid);
wherein (R₄) and (R₅) are independently selected from: -H and hydrocarbyl groups (preferably alkyl groups having from 1 to 4 carbon atoms) including from 1 to 10 carbon atoms. The benzene ring(s) may be further substituted with additional functional groups including those listed above with respect to (w), (x), (y) and (z), or other groups such as methyl groups, ethyl groups and halogens. The substituent groups (w), (x), (y) and (z) may be located meta, ortho or para to one another. Applicable polyfunctional arene compounds are represented by Formulae VII-IX: 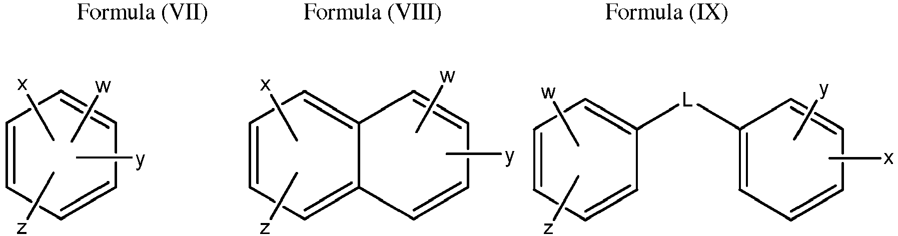 wherein (L) is selected from: a direct bond between the rings, an alkylene group comprising from 1 to 6 carbon atoms and an oxyalkylene group comprising from 1 to 6 carbon atoms.

In another preferred set of embodiments and with continued reference to Formulae VII-IX:
i) (w) is selected from: -NR₄R₅ and -OH,
ii) (x) is selected from: -COOH and -SO₃H,
iii) (y) is selected from: -H, -COOH and -SO₃H, and
iv) (z) is selected from: -H, -CH, -COOH, and -SO₃H.

In another preferred set of embodiments the polyfunctional arene compound is a crosslinker wherein:
a) (w) is selected from: -NR₄R₅,
b) (x) is selected from: -OH,
c) (y) selected from: -H, -COOH, and -SO₃H, and
d) (z) selected from: : -H, -CH, -COOH, and -SO₃H.

In another preferred subset of embodiments, (y) is selected from: -COOH and -SO₃H (i.e. a crosslinker with acid functionality) and (z) is -H, as represented by Formulae X and XI.

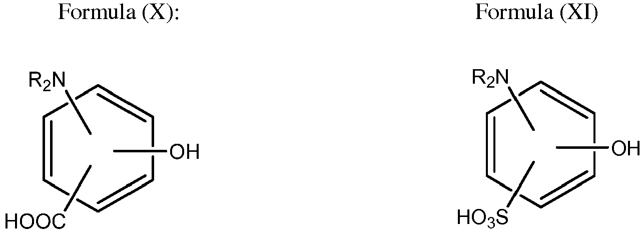

In yet another preferred set of embodiments, (w) and (x) are selected from: amines (-NR₄R₅ wherein R₄ and R₅ are independently selected from: wherein (R₄) and (R₅) are independently selected from: -H and hydrocarbyl groups (preferably alkyl groups having from 1 to 4 carbon atoms) including from 1 to 10 carbon atoms; and (y) and (z) are Hydrogen. Applicable species are as represented as follows:

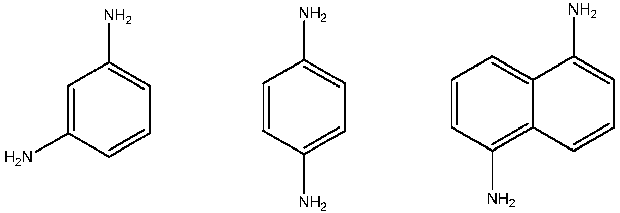

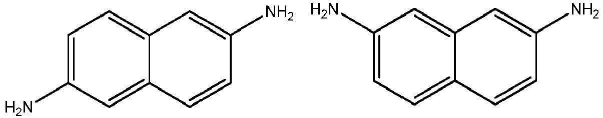

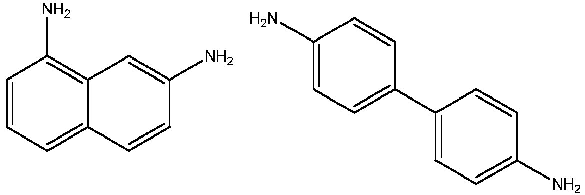

In another preferred embodiment, the polyfunctional arene compound is selected from at least one of: 2-aminobenzoic acid, 3-aminobenzoic acid, 4-aminobenzoic acid, 2-aminobenzene sulfonic acid, 3-aminobenzenesulfonic acid, 4-aminobenzenesulfonic acid, 2-aminophenol, 3-aminophenol, 4-aminophenol, 2-hydroxybenzoic acid, 3-hydroxybenzoic acid, 4-hydroxybenzoic acid, 2-hydroxybenzenesulfonic acid, 3-hydroxybenzenesulfonic acid, 4-hydroxybenzenesulfonic acid, 3,5-dihydroxyaniline, 2,4-dihydroxyaniline 3,5-diaminobenzoic acid, 2,4-diaminobenzoic acid, 2-hydroxy-4-aminobenzoic acid, 2-hydroxy-5-aminobenzoic acid, 2-hydroxy-4-aminobenzene sulfonic acid, 2-hydroxy-5-aminobenzenesulfonic acid, 2,4-diamino benzenesulfonic acid, 3,5-diaminobenzenesulfonic acid,2,hydroxyl-6-aminobenzenesulfonic acid, 2-hydroxy-4-methyl-5-aminobenzoic acid, 2,6-dihydroxy-5-aminobenzoic acid, 2,4-dihydroxy-5-aminobenzoic acid, 2-hydroxy-3,5-diaminobenzoic acid, 2-hydroxy-4-chloro-5-aminobenzoic acid, 2-hydroxy-5-amino-6-sulfobenzoic acid, 3-hydroxy-5-aminobenzenesulfonic acid, 3-hydroxy-4-methyl-5-aminobenzene sulfonic acid, 2-methyl-3-amino-5-hydroxybenzenesulfonic acid, 2-hydroxy-4-amino-6-sulfo benzoic acid, 4-amino-5-hydroxy-2,7-naphthalenedisulfonic acid, 8-amino-4-hydroxy-2,6-naphthalenedisulfonic acid, 3-amino-8-hydroxy-1,5-naphthalenedisulfonic acid, 3-hydroxy-8-amino-1,5-naphthalenedisulfonic acid, 4-amino-5-hydroxy-1,7-naphthalenedisulfonic acid, 4-hydroxy-6-amino-2-napthalenesulfonic acid, 4-hydroxy-5-amino-2-napthalenesulfonic acid, 2-amino-5-hydroxy-1,7-naphthalenedisulfonic acid, 4-hydroxy-7-amino-2,6-naphthalenedisulfonic acid, 4-hydroxy-6-amino-2,7-naphthalenedisulfonic acid, 4,4'-diaminobiphenyl-2-sulfonic acid, 4,4'-diaminobiphenyl-2,2'-disulfonic acid, 4,4'diaminobiphenyl-2-carboxylic acid, 4,4'-diamino biphenyl-2,2'-dicarboxylic acid, 4,4'-dihydroxybiphenyl-2-carboxylic acid, 4,4'-dihydroxybiphenyl-2,2'-dicarboxylic acid, 4,4'-dihydroxybiphenyl-2-sulfonic acid, 4,4'-dihydroxybiphenyl-2,2'-disulfonic acid, 1,4,7-triaminonaphthalene, 1,4,7-trihydroxynaphthalene.

The method of treating the polyamide layer with the subject polyfunctional arene compounds is not particularly limited and includes applying the polyfunctional arene compound (e.g. 10-20000 ppm) from an aqueous solution with a pH range of 3-11, which may further include 1-20 wt% alcohol such as methanol, isopropanol and polar aprotic solvents such as DMSO, DMF, DMAc, NMP, etc, such that the compound remains predominately on the outer surface (surface opposite to that contacting the porous support) of the polyamide layer, or soaking the polyamide layer in a dip tank containing the polyfunctional arene compound such that the polyamide layer becomes impregnated with the compound. The polyfunctional arene compound is applied to the polyamide layer in combination with the step of exposing the polyamide layer to nitrous acid, (e.g. the polyfunctional arene compound may be applied to the polyamide layer before, during or after exposure to nitrous acid, but preferably before).

Whether the membrane is treated with the subject polyfunctional arene compound, the membrane is preferably post-treated by exposure to nitrous acid. A variety of techniques for exposing the polyamide layer to nitrous acid are described in US 4888116 and are incorporated herein by reference. It is believed that the nitrous acid reacts with the residual primary amine groups present in the polyamide discrimination layer (or polyfunctional arene compound) to form diazonium salt groups. At least a portion of these diazonium salt groups hydrolyze to form phenol groups or azo crosslinks via diazo-coupling. In one embodiment, an aqueous solution of nitrous acid is applied to the thin film polyamide layer. Although the aqueous solution may include nitrous acid, it preferably includes reagents that form nitrous acid in situ, e.g. an alkali metal nitrite in an acid solution or nitrosyl sulfuric acid. Because nitrous acid is volatile and subject to decomposition, it is preferably formed by reaction of an alkali metal nitrite in an acidic solution in contact with the polyamide discriminating layer. Generally, if the pH of the aqueous solution is less than about 7, (preferably less than about 5), an alkali metal nitrite will react to liberate nitrous acid. Sodium nitrite reacted with hydrochloric or sulfuric acid in an aqueous solution is especially preferred for formation of nitrous acid. The aqueous solution may further include wetting agents or surfactants. The concentration of the nitrous acid in the aqueous solution is preferably from 0.01 to 1 wt%. Generally, the nitrous acid is more soluble at 5° than at 20°C and somewhat higher concentrations of nitrous acid are operable at lower temperatures. Higher concentrations are operable so long as the membrane is not deleteriously affected and the solutions can be handled safely. In general, concentrations of nitrous acid higher than about one-half (0.5) percent are not preferred because of difficulties in handling these solutions. Preferably, the nitrous acid is present at a concentration of about 0.1 weight percent or less because of its limited solubility at atmospheric pressure. The temperature at which the membrane is contacted can vary over a wide range. Inasmuch as the nitrous acid is not particularly stable, it is generally desirable to use contact temperatures in the range from about 0° to about 30° C, with temperatures in the range from 0° to about 20° C being preferred. Temperatures higher than this range can increase the need for ventilation or superatmospheric pressure above the treating solution. Temperatures below the preferred range generally result in reduced reaction and diffusion rates.

The reaction between the nitrous acid and primary amine groups occurs relatively quickly once the nitrous acid has diffused into the membrane. The time required for diffusion and the desired reaction to occur will depend upon the concentration of nitrous acid, any pre-wetting of the membrane, the concentration of primary amine groups present and the temperature at which contact occurs. Contact times may vary from a few minutes to a few days. The optimum reaction time can be readily determined empirically for a particular membrane and treatment.

One preferred application technique involves passing the aqueous nitrous acid solution over the surface of the membrane in a continuous stream. This allows the use of relatively low concentrations of nitrous acid. When the nitrous acid is depleted from the treating medium, it can be replenished and the medium recycled to the membrane surface for additional treatment. Batch treatments are also operable. The specific technique for applying aqueous nitrous acid is not particularly limited and includes spraying, film coating, rolling, or through the use of a dip tank among other application techniques. Once treated the membrane may be washed with water and stored either wet or dry prior to use.

The thin film polyamide layer may optionally include hygroscopic polymers upon at least a portion of its surface. Such polymers include polymeric surfactants, polyacrylic acid, polyvinyl acetate, polyalkylene oxide compounds, poly(oxazoline) compounds, polyacrylamides and related reaction products as generally described in US 6280853; US 7815987; US 7918349 and US 7905361. In some embodiments, such polymers may be blended and/or reacted and may be coated or otherwise applied to the polyamide membrane from a common solution, or applied sequentially.

Many embodiments of the invention have been described and in some instances certain embodiments, selections, ranges, constituents, or other features have been characterized as being "preferred." Characterizations of "preferred" features should in no way be interpreted as deeming such features as being required, essential or critical to the invention.

### EXAMPLES

Example 1: Sample membranes were prepared using pilot scale membrane manufacturing line. Polysulfone supports were cast using a 16.5 wt. % polysulfone solution in DMF and were subsequently soaked in a 3.5 wt. % meta-phenylene diamine (mPD) aqueous solution. The resulting support was pulled through a reaction table at constant speed while a thin, uniform layer of a non-polar solution was applied. The non-polar solution included trimesoyl acid chloride (TMC) and mono hydrolyzed trimesoyl acid chloride (mhTMC) within an isoparaffinic solvent (ISOPAR L). The total acid chloride content of the non-polar solution used to prepare each sample was held constant at 0.20 % w/v. The concentration of mhTMC was varied from 0 to 0.06% w/v between samples while the remaining acid chloride content was contributed solely by TMC. The non-polar solution also contained tributyl phosphate in a stoichiometric molar ratio with TMC of approximately 1:1.1. Excess non-polar solution was removed and the resulting composite membranes were passed through water rinse tanks and drying ovens. Selected membranes were then subjected to "post treatment" with a solution of 0.05 % NaNO₂ and 0.5 % of HCL for 15 min at 5-15°C followed by room temperature water soaking for 24 hours. Dissociated carboxylate content (mmoles/g) at pH 9.5 was measured by the Rutherford Backscattering (RBS). Pure water flux was measured by at room temperature, 0.86 MPa (125 psi) and pH 6 in absence of any salt. NaCl rejection was measured using an aqueous solution containing 2000 ppm of NaCl at 25°C, pH 8 and 1 MPa (150 psi).

**Table 1:**

| Sample | TMC (%w/v) | mh-TMC (% w/v) | Post treatment | Dissociated carboxylate content | Pure water Flux (GFD) | (%) NaCl Rejection |
|---|---|---|---|---|---|---|
| 1 | 0.2 | 0 | No | 0.13 | 37.4 | 99.16 |
| 2 | 0.2 | 0 | Yes | 0.26 | 49.3 | 99.02 |
| 3 | 0.18 | 0.02 | No | 0.32 | 37.9 | 99.34 |
| 4 | 0.18 | 0.02 | Yes | 0.30 | 51.5 | 99.47 |
| 5 | 0.14 | 0.06 | No | 0.47 | 39.3 | 98 |
| 6 | 0.14 | 0.06 | Yes | 0.49 | 53.6 | 99.34 |

Sample membranes were additionally tested for fouling resistance using a standard flat cell testing device. After the initial pure water permeability measurement, 100 ppm of sodium lauryl sulfate (SLS) was added to the feed solution, adjusted to a pH of 8, and operated for approximately 1 hour, after which flux measurements were performed. The difference in flux between the initial pure water test and subsequent "fouling" water (SLS) test is reported in Table 2 as relative flux loss (%). Samples was additionally tested using "fouling" water include 100 ppm of sodium lauryl sulfate in combination with 100 ppm of dodecane. After testing at pH 8, the pH of the feed was lowered to pH 5 and operated for another hour after which flux was re-measured. A similar test was then conducted at pH 3. As shown by the data summarized in Table 2, all the post treated membranes showed lower flux loss, particularly at lower pH values. And the membrane with the highest COOH content (post treated) demonstrated the least flux loss at pH 3.

**Table 2:**

| Sample | pH | Relative Flux Loss (%) When tested with fouling water (SLS and dodecane) | Relative Flux Loss (%) When tested with fouling water (SLS) |
|---|---|---|---|
| 1-1 | 8 | 0.9 | 0.5 |
| 2-1* | 8 | 5.3 | 0.7 |
| 3-1 | 8 | 7.3 | 4 |
| 4-1* | 8 | 9.8 | 6 |
| 5-1 | 8 | 10.4 | 5 |
| 6-1* | 8 | 10.4 | 5 |
| | | | |
| 1-2 | 5 | 19.6 | 20 |
| 2-2* | 5 | 25.9 | 9 |
| 3-2 | 5 | 19.9 | 16 |
| 4-2* | 5 | 21.5 | 9 |
| 5-2 | 5 | 36.9 | 9 |
| 6-2* | 5 | 14.1 | 4 |
| | | | |
| 1-3 | 3 | 63.6 | 54 |
| 2-3* | 3 | 42.1 | 21 |
| 3-3 | 3 | 61.5 | 51 |
| 4-3* | 3 | 38.0 | 24 |
| 5-3 | 3 | 59.9 | 50 |
| 6-3* | 3 | 33.4 | 25 |

| | | | |
|---|---|---|---|
| *post treated | | | |

## Claims

1. A method for treating an aqueous mixture having a pH of equal to or less than 3 and comprising at least 2 ppm of an anionic surfactant comprising the step of passing the mixture through a spiral wound element to produce a permeate stream and concentrate stream wherein the concentrate stream has a higher concentration of the anionic surfactant than the permeate stream, wherein the spiral wound element includes a composite polyamide membrane comprising a porous support and a thin film polyamide layer, and wherein the membrane is **characterized by** having:
i) a NaCl rejection and a sodium lauryl sulfate rejection of at least 99% when tested with an aqueous solution containing 2000 ppm NaCl and 2 ppm sodium lauryl sulfate at 25°C, pH 8 and 1MPa (150 psi); and
ii) a dissociated carboxylate content of at least 0.3 moles/kg of polyamide at pH 9.5 as measured by Rutherford Backscattering (RBS).

2. The method of claim 1 wherein the membrane is **characterized by** having a dissociated carboxylate content of at least 0.4 moles/kg of polyamide at pH 9.5 as measured by Rutherford Backscattering (RBS).

3. The method of claim 1 wherein the anionic surfactant comprises sodium lauryl sulfate.

4. The method of claim 1 wherein the aqueous mixture further comprises oil.

## Patentansprüche

1. Ein Verfahren zum Behandeln einer wässrigen Mischung, die einen pH-Wert von gleich oder unter 3 aufweist und mindestens 2 ppm eines anionischen Tensids beinhaltet, beinhaltend den Schritt des Führens der Mischung durch ein spiralgewickeltes Element, um einen Permeatstrom und einen Konzentratstrom herzustellen, wobei der Konzentratstrom eine höhere Konzentration des anionischen Tensids als der Permeatstrom aufweist, wobei das spiralgewickelte Element eine Verbundstoffpolyamidmembran umfasst, die einen porösen Träger und eine Dünnfilmpolyamidschicht beinhaltet, und wobei die Membran **dadurch gekennzeichnet ist, dass** sie Folgendes aufweist:
i) eine NaCl-Zurückhaltung und eine Natriumlaurylsulfat-Zurückhaltung von mindestens 99 % beim Testen mit einer wässrigen Lösung, die 2000 ppm NaCl und 2 ppm Natriumlaurylsulfat enthält, bei 25 °C, pH-Wert 8 und 1 MPa (150 psi); und
ii) einen Gehalt an dissoziiertem Carboxylat von mindestens 0,3 Mol/kg Polyamid bei einem pH-Wert von 9,5, wie durch Rutherford-Rückstreuung (RBS) gemessen.

2. Verfahren gemäß Anspruch 1, wobei die Membran **dadurch gekennzeichnet ist, dass** sie einen Gehalt an dissoziiertem Carboxylat von mindestens 0,4 Mol/kg Polyamid bei einem pH-Wert von 9,5, wie durch Rutherford-Rückstreuung (RBS) gemessen, aufweist.

3. Verfahren gemäß Anspruch 1, wobei das anionische Tensid Natriumlaurylsulfat beinhaltet.

4. Verfahren gemäß Anspruch 1, wobei die wässrige Mischung ferner Öl beinhaltet.

## Revendications

1. Une méthode pour traiter un mélange aqueux ayant un pH inférieur ou égal à 3 et comprenant au moins 2 ppm d'un tensioactif anionique comprenant l'étape consistant à faire passer le mélange à travers un élément en spirale afin de produire un flux de perméat et un flux de concentrat dans laquelle le flux de concentrat a une concentration du tensioactif anionique supérieure à celle du flux de perméat, dans laquelle l'élément en spirale inclut une membrane en polyamide composite comprenant un support poreux et une couche de polyamide en film mince, et dans laquelle la membrane est **caractérisée par** le fait d'avoir :
i) un taux de rejet de NaCl et un taux de rejet de laurylsulfate de sodium d'au moins 99 % quand ils sont testés avec une solution aqueuse contenant 2 000 ppm de NaCl et 2 ppm de laurylsulfate de sodium à 25 °C, pH 8 et 1 MPa (150 psi) ; et
ii) une teneur en carboxylate dissocié d'au moins 0,3 mole/kg de polyamide à pH 9,5 telle que mesurée par rétrodiffusion de Rutherford (RBS).

2. La méthode de la revendication 1 dans laquelle la membrane est **caractérisée par** le fait d'avoir une teneur en carboxylate dissocié d'au moins 0,4 mole/kg de polyamide à pH 9,5 telle que mesurée par rétrodiffusion de Rutherford (RBS).

3. La méthode de la revendication 1 dans laquelle le tensioactif anionique comprend du laurylsulfate de sodium.

4. La méthode de la revendication 1 dans laquelle le mélange aqueux comprend en sus de l'huile.
